Europäisches Patentamt

European Patent Office

Office européen des brevets

(11) Veröffentlichungsnummer: **0 085 650**
**B1**

(12) **EUROPÄISCHE PATENTSCHRIFT**

(45) Veröffentlichungstag der Patentschrift:
**05.08.87**

(51) Int. Cl.⁴: **B 05 D 1/02,** A 61 J 3/06

(21) Anmeldenummer: **83810023.8**

(22) Anmeldetag: **20.01.83**

(54) **Vorrichtung zum Überziehen von Teilchen, insbesondere Arzneimittel-Teilchen.**

(30) Priorität: **29.01.82 CH 555/82**

(43) Veröffentlichungstag der Anmeldung:
**10.08.83 Patentblatt 83/32**

(45) Bekanntmachung des Hinweises auf die Patenterteilung:
**05.08.87 Patentblatt 87/32**

(84) Benannte Vertragsstaaten:
**DE FR GB IT**

(56) Entgegenhaltungen:
**WO - A - 82/03972**
**DE - A - 2 249 863**
**DE - B - 1 225 035**
**US - A - 2 805 801**
**US - A - 3 357 398**
**US - A - 3 573 966**

(73) Patentinhaber: **Glatt Maschinen- und Apparatebau AG,
Kraftwerkstrasse 3, CH-4133 Pratteln (CH)**

(72) Erfinder: **Glatt, Werner, Bühlmühle, D-7851 Binzen (DE)**
Erfinder: **Grab, Erwin, Friedrich Neffstrasse 16,
D-7851 Rümmingen (DE)**

(74) Vertreter: **Eder, Carl E. et al, Patentanwaltsbüro EDER
AG Münchensteinerstrasse 2, CH-4052 Basel (CH)**

**Beschreibung**

Die Erfindung betrifft eine Vorrichtung zum Überziehen von Tabletten gemäss dem Oberbegriff des Anspruchs 1.

Aus der US-Patentschrift 3 573 966 ist es bekannt, zu überziehende Tabletten in eine um eine horizontale Achse drehbare Trommel mit einem zylindrischen, perforierten Mantel einzubringen. Beim Aufsprühen des Überzugmaterials wird die Trommel gedreht, so dass die Tabletten ein Bett bilden, das sich im wesentlichen im einen unteren Quadranten der Trommel befindet. Ferner wird mit einem an der Aussenfläche des Mantels anliegenden Saugschuh Luft durch das Tabletten-Bett und den Mantel hindurch aus der Trommel herausgesaugt. In der US-Patentschrift 3 573 966 ist nicht erwähnt, wie die abgesaugte Luft in die Trommel nachgeliefert wird. Die aus der Trommel herausgesaugte Luft muss jedoch offensichtlich oberhalb des Tabletten-Bettes in die Trommel nachströmen, wobei diese Nachströmung bei einer auf dem Markt bekannten, gemäss dem US-Patent 3 573 966 ausgebildeten Maschine durch die Perforation des Mantel hindurch erfolgt.

Die durch den Mantel der Trommel hindurch aus der Trommel herausgesaugte Luft beaufschlagt die Tabletten zusätzlich zur Schwer- und Zentrifugalkraft mit einer Kraft, die die Tabletten ebenfalls an den perforierten Mantel andrückt. Daraus resultiert ein verhältnismässig grosser Abrieb der Tabletten und des auf diese aufgebrachten Überzugmaterials, was nachteilig ist. Wenn das in Wasser oder einem andern Lösungsmittel gelöste Überzugsmaterial zum Aufbringen auf die Tabletten mit einem im Innern der Trommel angeordneten Zersprüher gegen die Tabletten gesprüht wird, gelangt es in intensiven Konkat mit der in die Trommel nachgelieferten, üblicherweise erwärmten Luft. Dies hat zur Folge, dass ein Teil des Lösungsmittels bereits verdampft, bevor das Lösungsmittel mit dem Überzugmaterial auf die Tabletten auftrifft. Dies kann zur Folge haben, dass ein Teil des auf die Tabletten aufgesprühte Überzugmaterial beim Auftreffen auf diese bereits zu trocken ist, um gut an diesen festzuhaften, was ebenfalls nachteilig ist.

Aus der US-Patentschrift 3 357 398 ist es ferner bekannt, die zu überziehenden Tabletten in eine um eine geneigte Achse drehbare Trommel einzubringen, bei der nicht nur der zylindrische Teil der Wand, sondern auch noch auf verschiedenen Seiten von diesem vorhandene, konische Wandteile perforiert sind. Die Trommel ist in einem sie mit einem Zwischenraum umschliessenden Gehäuse untergebracht. Dieser Zwischenraum ist gegen die Umgebung dicht abgeschlossen und durch Dichtungen in zwei ungleich grosse Teile unterteilt. Der eine, kleinere Teil erstreckt sich ungefähr über denjenigen Umfangsabschnitt der Trommel, in dem sich beim Betrieb das Tabletten-Bett befindet.

Beim kleineren Zwischenraum-Teil wird Luft durch die perforierte Trommel-Wand und das Tabletten-Bett hindurch in die Trommel eingeleitet und beim andern, grössern Zwischenraum-Teil wieder durch die Wand der Trommel hindurch abgeleitet. Diese Führung des Luftstromes hat den Nachteil, dass leichte Teile nach oben geblasen werden, wobei insbesondere der durch den Abrieb entstehende Staub stark aufgewirbelt und auch aus der Trommel herausgeblasen wird. Ferner ist es schwierig, die Luftzufuhr so zu dosieren, dass sie eine gute Trocknungswirkung ergibt, ohne das Aufsprühen des Überzugmaterials zu behindern.

Die deutsche Offenlegungsschrift 2 805 801 betrifft Vorrichtungen zum Beschichten von Granulaten mit einer Hülle und zum Trocknen der Hülle durch Luft. Dabei ist unter anderem eine Vorrichtung mit einer Trommel offenbart, deren zylindrische Wand mit einer Anzahl über ihren Umfang verteilter Lüftungsöffnungen versehen ist, die durch perforierte, ins Trommelinnere hineinragende Wandteile gebildet und durch fest an der Trommel angeordnete, mit dieser mitrotierende, durch Verbindungskanäle gebildete Kammern mit einem Verteiler verbunden sind. Beim Betrieb wird Luft durch sich momentan gerade im Bereich des Granulatbettes befindende Lüftungsöffnungen hindurch in die Trommel hinein und aus dieser heraus geleitet. Abgesehen davon, dass aus der deutschen Offenlegungsschrift 2 805 801 nicht hervorgeht, wo, wie und wann die Granulate beschichtet werden, erstrecken sich die Lüftungsöffnungen der erwähnten, aus dieser Offenlegungsschrift bekannten Vorrichtung nur über verhältnismässig kleine Teile der von den sich in der Trommel befindenden Granulat-Teilchen bedeckten Fläche der Trommel-Wand. Dabei sind insbesondere zwischen entlang dem Trommel-Umfang aufeinander folgenden Lüftungsöffnungen verhältnismässig grosse Zwischenräume vorhanden. Man muss daher entweder einen verhältnismässig grossen Zeitaufwand zum Trocknen der beschichteten Teilchen in Kauf nehmen oder aber die Trocknungsluft mit grosser Geschwindigkeit durch die Lüftungsöffnungen hindurch leiten, wobei die beschichteten Teilchen im letzteren Fall von der Wand weggeblasen und danach beim Wiederaufprallen auf die Wand und/oder andere Teilchen beschädigt werden können.

Da die Perforations-Löcher der Lüftungsöffnungen nicht in Abschnitten eines zylindrischen Mantels, sondern in von diesem weg ins Trommelinnere hin vorspringenden Wandteilen angeordnet sind und weil diese perforierten Wandteile auf der Trommelaussenseite zudem durch die die Verbindungskanäle begrenzenden, an der Trommel befestigten, haubenartigen Teile abgedeckt sind, ist die Trommel schlecht reinigbar. Auch der Luft-Verteiler ist schwer zu reinigen. Die schwierige Reinigbarkeit ist beispielsweise für die Herstellung pharmazeutischer Produkte, die eine hohe Reinheit aufweisen sollen, sehr nachteilig. Bei der Benutzung der Vorrichtung ist die Ausdehnung des Bettes der sich in der Trommel befindenden Teilchen von deren Menge und Beschaffenheit abhängig und kann daher von Fall zu Fall variieren. Wenn man nun bei der bekannten Vorrichtung die entlang dem Trommel-Umfang gemessene Ausdehnung der belüftbaren Zone an die Ausdehnung des Teilchen-Betts anpassen möchte, müsste hierzu der Luft-Verteiler verändert werden, was verhältnismässig kompliziert und aufwendig ist. Im übrigen wird die zum Trocknen der eine Beschichtung aufweisenden Teilchen dienende Luft üblicherweise vor dem Einleiten in die Trommel erwärmt. Wenn nun die ganze Menge der benötigten, warmen Luft durch die verhältnismässig kleinen Lüftungsöffnungen hindurch in die Trommel hineingeleitet wird, bewirkt dies eine starke Erwärmung der sich im Bereich der Lüftungsöffnungen befindenden Wandbereiche der Trommel. Dies wiederum hat zur Folge, dass die Teilchen zum Anbacken an der Trommelwand neigen.

Der Erfindung liegt die Aufgabe zugrunde, eine Vorrichtung zum Überziehen von Teilchen zu schaffen, die Nachteile der bekannten Vorrichtungen möglichst weitgehend eliminiert und insbesondere die Reinigbarkeit der zum Hineinleiten von Gas in die Trommel und zum Herausleiten von Gas aus dieser dienenden Kammern verbessert und ermöglicht, die entlang dem Trommel-Umfang gemessene Ausdehnung des Trommel-Wandbereichs, bei dem Gas durch die Teilchen hindurch geleitet wird, mit einfachen konstruktiven Mitteln zu verändern. Dabei soll vorzugsweise auch ermöglicht werden, dass sich die zum Hindurchleiten von Gas durch die Trommel-Wandung dienenden Kammer-Öffnungen annähernd lückenlos ungefähr über denjenigen Abschnitt des Trommel-Umfangs erstrecken können, der beim Betrieb von einem Teilchen-Bett bedeckt wird.

Diese Aufgabe wird ausgehend von der deutschen Offenlegungsschrift 2 805 801 durch eine Vorrichtung der einleitend genannten Art gelöst, wobei die Vorrichtung gemäss der Erfindung durch die Merkmale des Anspruchs 1 gekennzeichnet ist.

Vorteilhafte Ausgestaltungen der Vorrichtung ergeben sich aus den abhängigen Ansprüchen.

Zu dem im Anspruch 1 angegebenen Begriff «Arzneimittel-Teilchen» sei bemerkt, dass darunter feste oder mindestens einen festen Mantel aufweisende Arzneimittel, d.h. sogenannte feste Arzneimittel-Darreichungsformen, wie Tabletten sowie auch Pillen und Kapseln zu verstehen sind. Das Verfahren und die Vorrichtung gemäss der Erfindung können aber auch zum Überziehen von Bonbons und andern, insbesondere zur Einnahme bestimmter, in grossen Mengen zu überziehende Teilchen dienen.

Die Erfindung soll nun anhand eines in der Zeichnung dargestellten Ausführungsbeispiels erläutert werden. Dabei können alle nachfolgend geoffenbarten Merkmale und Merkmalskombinationen, soweit sie neu sind, zusätzlich auch noch als erfindungswesentlich gelten. In der Zeichnung zeigen

die Figur 1 eine Frontansicht einer Vorrichtung zum Überziehen von Tabletten, wobei die seitlichen Klappdeckel des Gehäuses aufgeklappt sind, die Figur 2 einen Grundriss der Vorrichtung, mit zugeklappten Klappdeckeln,

die Figur 3 eine Seitenansicht der Vorrichtung, wobei aber der dem Betrachter zugewandte Klappdeckel entfernt ist, und

die Figur 4 einen Schnitt durch einen Teil der Trommel und den Gas-Übertragungsschuh.

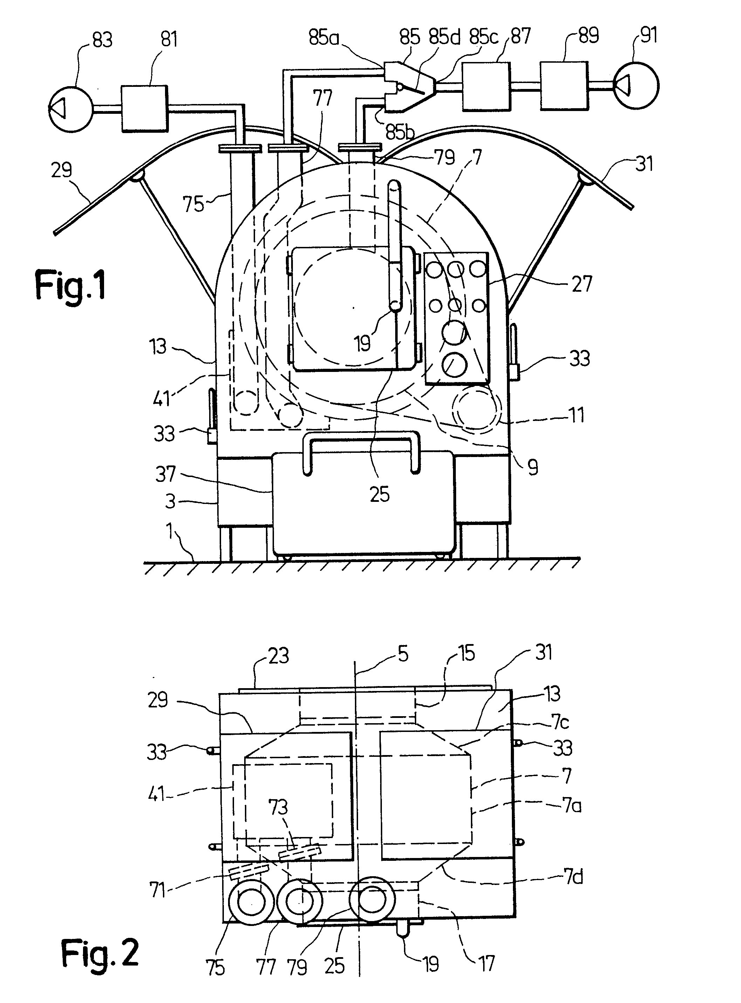

Die in den Figuren 1 bis 3 dargestellte Vorrichtung zum Überziehen von Tabletten weist ein auf dem Boden 1 eines Raumes stehendes Gestell 3 auf, das mindestens zum Teil aus miteinander verschweissten Profilstäben gebildet ist. Im Gestell 3 ist eine Trommel 7 um eine horizontale Drehachse 5 drehbar gelagert.

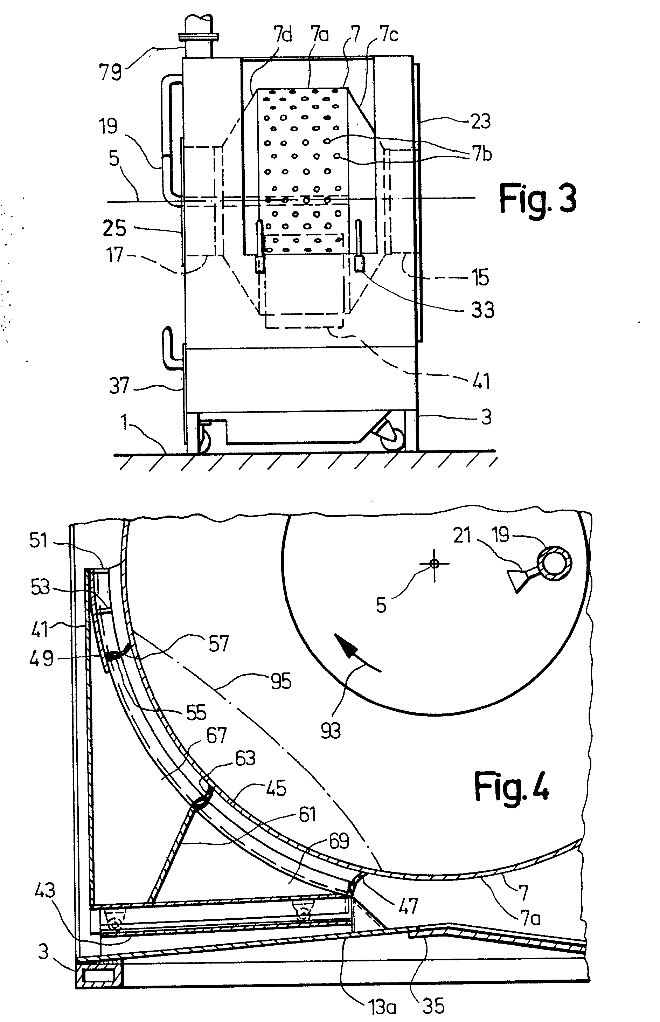

Die Wand der im wesentlichen zur Drehachse 5 rotationssymmetrischen Trommel 7 weist im mittleren Teil einen kreiszylindrischen Mantel 7a auf. Dieser ist, wie es aus der Figur 2 ersehbar ist, mit einer durch Löcher 7b, nämlich Bohrungen gebildeten Perforation versehen, wobei die Löcher 7b zur Verdeutlichung mit übertriebenen Grössen und Abständen gezeichnet sind. Die Perforations-Löcher 7b sind gleichmässig über den Umfang des kreiszylindrischen Mantels 7a verteilt. Hingegen erstreckt sich die Perforation nicht über die ganze parallel zur Drehachse 5 gemessene Abmessung des kreiszylindrischen Mantels 7a, so dass dieser beidseitig der Perforation noch eine ungelochte Ringfläche aufweist. An den kreiszylindrischen Mantel 7a schliesst beidseitig ein sich konisch verjüngender, ungelochter Seitenwand-Teil 7c bzw. 7d an. An die dünneren Enden der konischen Wandteile 7c und 7d schliesst je ein eine Öffnung begrenzender, kleiner zylindrischer Rand an. Der Mantel 7a ist mit einer Entnahme-Öffnung zum Entnehmen der Tabletten versehen. Diese Öffnung erstreckt sich über die ganze, parallel zur Drehachse 5 gemessene Abmessung des Mantels 7a bis in die konischen Wand-Teile 7c, 7d hinein und ist mit einem Verschluss-Element abschliessbar, das mit Scharnieren um eine zur Drehachse 5 parallele Schwenkachse schwenkbar mit der Trommel verbunden ist. Das Verschluss-Element ist ebenfalls perforiert und seine Aussenfläche geht in der Schliess-Stellung, wenn man von den sich bei den Rändern des Mantels 7a befindenden Scharnieren absieht, glatt und stetig in die Aussenfläche des restlichen Mantels 7a über. Das Verschluss-Element kann mittels eines an der Trommel montierten Pneumatik-Zylinders wahlweise in der Schliess-Stellung gehalten oder geöffnet werden. Im Innern der Trommel 7 können im übrigen an dieser befestigte, nicht dargestellte Schaufeln zum Mitnehmen der Tabletten vorhanden sein. Bei der sich in der Figur 3 rechts befindenden Stirnseite der Trommel 7 ist diese mit einem nicht dargestellten Kugellager gelagert und drehfest mit einem in der Figur 1 angedeuteten Zahnring 9 verbunden. Eine Antriebsvorrichtung 11 weist einen Motor und ein Zahnrad auf, das über einen Zahnriemen mit dem Zahnring 9 verbunden ist.

Die Vorrichtung weist ein am Gestell 3 befestigtes, als Ganzes mit 13 bezeichnetes Gehäuse auf, das aus einem etwas unter der Trommel 7 und der Antriebsvorrichtung 11 angeordneten in der Figur 4 ersichtlichen Boden 13a, zwei Stirnwänden und einem U-förmigen Wand-Teil gebildet ist, der zwei Seitenwände und eine gebogene, in diese übergehende Deckwand bildet. Das Gehäuse 13 schliesst die sich darin befindende Trommel mindestens einigermassen staub- und gasdicht gegen die Umgebung ab. Der Boden 13a fällt von einer parallel zur Drehachse 5 verlaufenden Mittellinie weg auf beide Seiten hin leicht ab. Auf den beiden Gehäuse-Stirnwänden ist an diesen oder direkt am Gestell 3 je ein zur Drehachse 5 koaxialer, im wesentlichen kreiszylindrischer Stutzen 15 bzw. 17 befestigt. Der Stutzen 15 ist geringfügig dünner als die von der Innenfläche des sich in der Figur 3 auf der rechten Trommelseite befindenden Trommel-Randes begrenzte Öffnung und ragt mit etwas Spiel ein wenig in diese hinein. Der Stutzen 17 hat ungefähr den gleichen Durchmesser wie der ihm zugewandte Trommel-Rand und stösst annähern an diesen an.

Ein Sprühorgan 19 weist ein Düsenhalterohr auf, das durch den Stutzen 17 hindurch in die Trommel 7 hineinragt und an dem eine Anzahl Sprühdüsen 21 zum Zersprühen des Überzugmaterials befestigt sind. Der aus dem Gehäuse 13 herausragende Teil des Düsenhalterohres ist nach oben abgebogen und mit einem ebenfalls abgebogenen Rohr verbunden, das einen Teil eines oberhalb der Trommel 7 in Führungen parallel zur Drehachse ausziehbar geführten Teleskopauszuges bildet. Der letztere ist mit einem Flansch-Anschluss zum Anschliessen einer Zuleitung für das zu zersprühende Material versehen und im übrigen derart ausziehbar, dass das Düsenhalterohr 19 für Reinigungs- und Revisionsarbeiten vollständig aus der Trommel 7 und dem Stutzen 17 herausgezogen werden kann.

Die der Trommel 7 abgewandten Enden der beiden Stutzen 15, 17 sind durch bewegbar oder lösbar an den beiden Stirnseiten des Gehäuses angeordnete Verschlusselemente, beispielsweise eine einflügelige Türe 23 und eine zweiflügelige Türe 25, mindestens einigermassen gasdicht abschliessbar. An der in der Figur 1 ersichtlichen Stirnwand des Gehäuses 13 ist noch ein Schalt-Tableau 27 mit Anzeigeinstrumenten und Bedienungselementen vorhanden. Am First des Gehäuses 13 sind mittels Scharnieren, deren Schwenkachsen parallel zur Drehachse 5 verlaufen, zwei Klappdeckel 29, 31 schwenkbar befestigt. Diese können von einer in der Figur 2 dargestellten Schliess-Stellung, in der sie mit Verriegelungselementen 33 verriegelt sind und im Gehäuse 13 vorhandene Öffnungen dicht abschliessen, in eine in der Figur 1 dargestellte Öffnungs-Stellung geklappt und mit Stützen abgestützt werden. Im übrigen sind die Wände des Gehäuses 13 noch mit einigen andern, nicht dargestellten Öffnungen versehen, die vorwiegend zu Unterhalts- und Reinigungszwecken dienen und die durch ebenfalls nicht dargestellte Verschlussplatten verschliessbar sind.

Im Boden 13a des Gehäuses 13 ist ebenfalls eine Öffnung vorhanden. Diese ist mit einer in der Figur 4 in ihrer Schliess-Stellung gezeichneten Boden-Klappe 35 verschliessbar. Die letztere ist mit nicht dargestellten Scharnieren befestigt und kann durch einen ebenfalls nicht dargestellten Pneumatikzylinder wahlweise in ihrer Schliess-Stellung gehalten oder nach unten in eine Öffnungs-Stellung geklappt werden. Das Gestell 3 ist derart ausgebildet, dass zwischen dem Fussboden 1 und dem Gehäuse-Boden 13a ein Raum frei bleibt, in den ein nur in den Figuren 1 und 3 dargestellter Wagen 37 eingestellt werden kann, der einen Handgriff und einen schalen- oder trogförmigen, oben offenen Behälter aufweist.

Ein besonders deutlich aus der Figur 4 ersehbarer Luft- oder Gas-Übertragungsschuh 41 ist bezüglich der Trommel-Drehachse 5 in demjenigen unteren Quadranten angeordnet, der sich in der Figur 1 auf der linken Seite der durch die Trommel-Drehachse verlaufenden Vertikalebene befindet. Der Übertragungsschuh 41 ist rechtwinklig zur Drehachse 5 verschiebbar geführt. Zu diesem Zweck ist auf der oberen Seite des an einem horizontalen Rahmen des Gestells 3 befestigten Bodens 13a eine Führung 43 angeordnet, die in der Art eines Schubladenauszuges ausgebildet ist und am Gehäuse 13 oder direkt am Gestell 3 befestigte Schienen aufweist, die rechtwinklig zur Trommel-Drehachse 5 verlaufen und entweder horizontal angeordnet oder von der Trommel weg bezüglich einer Horizontalebene leicht nach unten geneigt sind. Auf diesen Schienen ist mit Rollen oder Gleitflächen ein Schlitten verschiebbar geführt, der seinerseits Laufbahnen aufweist, auf denen wiederum mit Rollen oder Gleitflächen der Übertragungsschuh 41 verschiebbar geführt ist. Wenn der Klappdeckel 29 aufgeklappt ist, kann der Übertragungsschuh 41 durch die im Gehäuse 13 vorhandene Öffnung von aussen her gefasst und von seiner in den Figuren 1, 2 und 4 dargestellten Betriebs-End-Stellung, in der er sich vollständig im Innern des Gehäuses 13 befindet und dicht am Mantel 7a der Trommel 7 anliegt, manuell in eine Reinigungs-End-Stellung verschoben werden, in der er durch einen Zwischenraum von der Trommel 7 getrennt ist. Der Übertragungsschuh kann durch Arretierelemente in seinen beiden Endstellungen arretiert werden. Im übrigen kann er in der Reinigungs-End-Stellung auch vom Schlitten abgehoben und vollständig von der restlichen Vorrichtung getrennt werden. Die parallel zur Drehachse 5 gemessene Breite des Übertragungsschuhs 41 ist mindestens gleich der entsprechenden Ausdehnung des perforierten Abschnittes des Mantels 7a. Dabei ist aber der Übertragungsschuh derart ausgebildet und bemessen, dass die Scharniere des zum Verschliessen der erwähnten Entnahme-Öffnung der Trommel dienenden Verschluss-Elementes beim Drehen der Trommel 7 beidseitig vom Übertragungsschuh passieren können, wenn dieser sich in seiner Betriebs-End-Stellung befindet.

Der Übertragunsschuh 41 ist im wesentlichen als hohler Kasten ausgebildet, dessen auf seiner in der Betriebs-End-Stellung dem Mantel 7a der Trommel 7 zugewandte Seite eine zur Trommel-Drehachse koaxial gebogene Form aufweist. Der Übertragungsschuh ist im Bereich seiner der Trommel zugewandten Seite offen, oder hat, anders gesagt, auf dieser Seite eine mit einem Hohlraum in Verbindung stehende Mündungsöffnung. Diese Mündungsöffnung wird auf zwei einander abgewandten Seiten durch je eine Dichtung 45 begrenzt, die einen zur Trommel-Drehachse koaxialen Kreisbogen bildet. In der Betriebs-Stellung liegt jede der beiden Dichtungen 45 an einem der lochfreien Randabschnitte des Mantels 7a an. Am unteren Ende der Mündungsöffnung wird diese durch eine zur Trommel-Drehachse parallel verlaufende Dichtung 47 begrenzt. In den oberen Teil des Übertragungsschuhs 41 ist eine bogenförmige, zur Trommel-Drehachse koaxiale Platte 49 eingesetzt. Diese ist bei ihrem oberen Rand sowie bei ihren beiden Seitenrändern gasdicht mit der Wandung des Übertragungsschuhs verbunden. Auf der der Trommel 7 zugewandten Seite der Platte 49 sind drei Dichtungs-Halter 51, 53, 55 befestigt. Diese sind auf einem um die Trommel-Drehachse 5 herum verlaufenden Kreisbogen gegeneinander versetzt und haben im übrigen etwa die Form U-förmiger, gegen die Trommel hin offener Rinnen. Eine Dichtung 57 kann wahlweise in einen dieser Dichtungs-Halter eingesetzt werden, beispielsweise wie in der Figur 4 dargestellt, in den untersten Dichtungs-Halter 55. Diese parallel zur Drehachse 5 verlaufende, versetzbare Dichtung 57 bildet die obere Begrenzung der Mündungsöffnung des Übertragungsschuhs und liegt in der Betriebs-End-Stellung des Übertragungsschuhs wie die andern Dichtungen 45, 47 dicht an der Trommel an. Im übrigen stossen die Enden der vier Dichtungen 45, 47, 57 dicht aneinander an, wobei die Dichtungen 45, 47 auch zusammenhängend sein könnten, so dass also der Hohlraum des Übertragungsschuhs in dessen Betriebs-Stellung über die Mündungsöffnung mindestens einigermassen gasdicht mit der Trommel verbunden wird.

Im Hohlraum des Übertragungsschuhs 41 ist eine parallel zur Trommel-Drehachse 5 verlaufende Trennwand 61 angeordnet, die dicht mit dem Bodenteil und den Seitenwänden des Übertragungsschuhs verbunden ist und eine Dichtung 63 hält. Diese ist gleich wie die Dichtungen 45, 47, 55 elastisch deformierbar und lippenförmig. Wenn sich der Übertragungsschuh in seiner Betriebs-End-Stellung befindet, liegt die Dichtung 63 ähnlich wie die Dichtungen 47 und 57 parallel zur Trommel-Drehachse 5 an der Aussenseite des Trommel-Mantels 7a an und stösst im übrigen mit ihren Enden auch dicht an die Dichtung 45 an oder ist mit diesen verbunden. Die Trennwand 61 und die Dichtungen 63 teilen den Hohlraum des Übertragungsschuhs 41 in zwei in der Betriebs-End-Stellung gasdicht voneinander getrennte Kammern, nämlich eine Ableit-Kammer 67 und eine Zuleit-Kammer 69.

Wenn sich der Übertragungsschuh 41 in seiner Betriebs-End-Stellung befindet, ist jede dieser Kammern 67, 69 gasmässig über eine Kupplung 71 bzw. 73 mit einer teilweise im Gehäuse 13 angeordneten Leitung 75 bzw. 77 verbunden. Jede Kupplung 71, 73 weist zwei ringflanschartige Kupplungsstücke auf, von denen das eine starr am Übertragungsschuh 41 und das andere starr am Gestell 3 befestigt ist.

Wenn sich der Übertragunsschuh 41 in seiner Betriebs-End-Stellung befindet, liegen die ringflanschartigen Kupplungsstücke paarweise bei einer Berührungs-Ebene aneinander an, die vertikal verläuft und ferner mit der Verschieberichtung des Übertragungsschuhs einen gewissen Winkel bildet, der zweckmässigerweise höchstens 45°· beträgt. Die Berührungs-Ebene steht dabei derart, dass die Kupplungsstücke durch eine von der Trommel weggerichtete Verschiebung des Übertragungsschuhs 41 getrennt werden können. Zweckmässigerweise ist mindestens eines der beiden Kupplungsstücke jeder Kupplung mit einem elastisch deformierbaren Dichtungsring versehen.

Wenn der Übertragungsschuh 41 ausgehend von seiner Betriebs-End-Stellung von der Trommel weg nach aussen verschoben wird, werden die Kupplungsstücke der beiden Kupplungen 71, 73 voneinander getrennt und damit der Übertragungsschuh gasmässig entkuppelt.

Im übrigen sei noch bemerkt, dass lösbare Spannmittel vorgesehen werden können, um die zusammengehörenden Kupplungsstücke in der Betriebs-Stellung zu übergreifen und gegeneinander zu ziehen. Die Spannmittel wären dabei derart ausgebildet, dass sie mit wenigen Handgriffen, etwa durch Verschwenken eines Hebels, von einer Spann-Stellung, in der sie die Kupplungsstücke gegeneinander ziehen, in eine Freigabe-Stellung bringbar sind, in der die Kupplungsstücke durch Verschieben des Übertragungsschuhs voneinander trennbar sind.

Ferner ist noch eine sich ebenfalls teilweise im Gehäuse 13 befindende Leitung 79 vorhanden, die in den Stutzen 17 mündet und über diesen mit dem Innenraum der Trommel 7 verbunden ist. Die drei Leitungen 75, 77, 79 können beispielsweise auf derjenigen Seite des Gehäuses 13, auf der sich der Stutzen 17 befindet, auf der obern Seite des Gehäuses 13 aus diesem austreten und dort mit Flansch-Anschlüssen versehen sein.

Der Anschluss der Leitung 75 ist über eine Leitung und ein Filter 81 mit dem Saugeingang eines Saug-Gebläses 83 verbunden. Die Anschlüsse der beiden Leitungen 77 und 79 sind je mit einem Anschluss 85a bzw. 85b eines Gaszufuhr-Verteilers 85 verbunden. Der dritte Anschluss 85c des Verteilers 85 ist über ein Heizorgan 87 und ein Filter 89 mit dem Ausgang eines Gebläses 91 verbunden. Der Verteiler 85 weist ein Verstellorgan 85d auf, das beispielsweise durch eine manuell verstellbare Klappe gebildet sein kann. Durch entsprechendes Einstellen des Verstellorgans 85d kann die beim Betrieb vom Gebläse 91 gelieferte und im Heizorgan 87 erwärmte Luft auf die beiden Leitungen 77, 79 verteilt werden, wobei an sich auch die Möglichkeit besteht, wahlweise nur einer der beiden Leitungen, insbesondere nur der Leitung 77, Luft zuzuführen.

Nun soll der Betrieb der Vorrichtung erläutert werden. Zunächst wird eine Charge zu überziehender Tabletten durch einen der Stutzen 15 oder 17 in die Trommel 7 eingebracht. Danach wird die Öffnung des betreffenden Stutzens verschlossen und die Trommel 7 mittels der Antriebsvorrichtung 11 in der Richtung des in der Figur 4 eingezeichneten Pfeils 93 gedreht. Die Tabletten-Charge wird durch die Drehbewegung der Trommel 7 in denjenigen Quadranten der Trommel 7 bewegt, bei dem der Übertragungsschuh 41 angeordnet ist. Die Tabletten-Charge bildet dann etwa das in der Figur 4 strichpunktiert dargestellte Tabletten-Bett 95. Dieses umfasst ungefähr den von den beiden Dichtungen 47 und 57 begrenzten Umfangsabschnitt der Innenfläche des Mantels 7a und erstreckt sich vorzugsweise allseitig ein wenig über diesen Umfangsabschnitt heraus. Beim Drehen der Trommel 7 wird durch das Sprühorgan 19 flüssiges, etwa gelöstes oder durch eine Suspension gebildetes Überzugmaterial zugeführt und mit den Sprühdüsen 21 gegen das Tabletten-Bett 95 gesprüht. Des weitern wird durch das Gebläse 91 über das Filter 89, das Heizorgan 87 und den Verteiler 85 als Trocknungs-Gas filtrierte und erwärmte Luft oder eventuell ein Schutzgas zugeführt. Ein Teil dieses Trocknungs-Gases strömt dann zum Teil durch die Leitung 79 in den sich über und neben dem Tabletten-Bett 95 befindenden Teil des Innenraumes der Trommel 7 ein. Ein anderer Teil dieses Trocknungs-Gases wird über die Leitung 77 und die Kupplung 73 der Kammer 69 des Gas-Übertragungsschuhs 41 zugeführt. Aus dieser strömt dann Trocknungs-Gas durch die Perforation des Mantels 7a hindurch in das Tabletten-Bett 95 und also ebenfalls in die Trommel 7 hinein. Gleichzeitig wird Gas durch die Perforation des Mantels 7a hindurch aus dem Innenraum der Trommel 7 heraus in die Kammer 67 gesogen.

Die der Aussenfläche des Trommel-Mantels 7a zugewandte Öffnung der Zuleit-Kammer 69 bildet also eine Zuleit-Öffnung, durch die in einem Teil des vom Tabletten-Bett 95 bedeckten Abschnittes des Trommel-Mantels 7a Trocknungs-Gas zugeführt wird. Die Öffnung der Ableit-Kammer 67 bildet analog eine Ableit-Öffnung, durch die in einem Teil des vom Tabletten-Bett 95 bedeckten Abschnittes des Mantels 7a Gas durch diesen hindurch aus der Trommel abgeleitet wird. Die Zuleit-Öffnung und die Ableit-Öffnung sind entlang dem Trommel-Umfang versetzt, wobei die Zuleit-Öffnung in der Drehrichtung gesehen vor der Ableit-Öffnung angeordnet und also tiefer gelegen ist als die letztere. Im übrigen erstreckt sich sowohl die Zuleit- als auch die Ableit-Öffnung mindestens über je 25% des insgesamt vom Tabletten-Bett bedeckten Umfangsteils des Trommel-Mantels 7a. Dementsprechend umfasst sowohl die Zuleit-Öffnung als auch die Ableit-Öffnung mindestens 25% des vom Tabletten-Bett bedeckten, mit einer Perforation versehenen Abschnittes der Trommel-Wandung.

Das durch das Tabletten-Bett 95 hindurch geleitete, warme Trocknungs-Gas trocknet das auf die Tabletten aufgesprühte Überzugmaterial. Das durch die Kammer 69 zugeführte Trocknungs-Gas übt eine von der Innenfläche des Trommel-Mantels 7a weg gegen das Innere der Trommel 7 gerichtete Kraft auf die Tabletten aus, die die an diesen angreifenden Schwer- und Zentrifugalkräfte teilweise kompensiert und das Tabletten-Bett auflockert. Dadurch wird der Abrieb von Tablettenmaterial und auf die Tabletten aufgesprühtem Überzugmaterial reduziert. Mit dem Gaszufuhr-Verteiler 85 können die Trocknungs-Gas-Mengen, die durch die Kammer 69 und den Stutzen 17 zugeführt werden, derart aufeinander abgestimmt werden, dass das durch die Kammer 69 zugeführte Trocknungs-Gas die Bewegung des gegen das Tabletten-Bett gesprühten Überzugmaterials nicht merklich behindert. Insbesondere kann erreicht werden, dass ein Teil des durch die Kammer 69 zugeführten Gases durch das Tabletten-Bett hindurch zu der von der Kammer 67 gebildeten Ableit-Öffnung strömt, ohne im leeren, d.h. tablettenfreien Teil des Trommel-Innenraumes eine ins Gewicht fallende Gasströmung zu verursachen.

Die beiden Gebläse 83 und 91 können im übrigen derart dimensioniert und eventuell geregelt oder gesteuert werden, dass in der Trommel 7 während des Überzugsvorganges ungefähr Umgebungsdruck herrscht.

Die Verstellbarkeit der Dichtung 57 ermöglicht, den Umfangs- oder Winkelbereich der Trommel, über den Luft aus der Trommel 7 in den Übertragungsschuh 41 hineingesaugt wird, an die Menge und Beweglichkeit der in die Trommel 7 eingebrachten Tabletten anzupassen. Auf diese Weise kann erreicht werden, dass sich der Saugbereich, d.h. die Ableit-Öffnung der Kammer 67 annähernd bis zum oberen Rand des Tabletten-Bettes, aber nicht oder mindestens nicht wesentlich über dieses heraus erstreckt.

Wenn eine Tabletten-Charge mit Überzugmaterial überzogen und der Überzug getrocknet worden ist, wird die Trommel 7 in derjenigen Stellung gestoppt, in der die Tabletten durch die im Trommel-Mantel vorhandene Entnahme-Öffnung und durch die im Boden 13a vorhandene, mit der Boden-Klappe 35 verschliessbare Öffnung hindurch in den Wagen 37 entleert werden können.

Es sei noch auf die nicht vorveröffentlichte Internationale Offenlegungsschrift Nr. WO 82/03972 verwiesen, in der verschiedene Einzelheiten von ähnlichen Vorrichtungen zum Überziehen von Teilchen geoffenbart sind.

Die Vorrichtung kann in verschiedener Hinsicht modifiziert werden. Beispielsweise könnten die Dichtung 57 kontinuierlich verstellbar und die Dichtung 47 auch versetzbar oder verstellbar fixiert werden. Ferner könnten auch die Trennwand 61 und die Dichtung 63 versetz- oder verstellbar ausgebildet sein. Ferner könnte die Zuleit- und die Ableit-Öffnung je durch eine umlaufende, zusammenhängende Dichtung begrenzt sein.

Die beiden Kupplungen des Übertragungsschuhs könnten statt auf der gleichen Seite auf einander abgewandten Seiten angeordnet werden.

Die Zuleit- und Ableit-Öffnung des Gas-Übertragungsschuhs könnten beispielsweise auch neben einander entlang einen Umfangsabschnitt der Trommel verlaufen. Ferner könnte die Zuleit-Öffnung die Ableit-Öffnung ringförmig umschliessen. Im übrigen könnten mehrere Zuleit- und/oder mehrere Ableit-Öffnungen vorhanden sein.

Des weitern könnte der Gaszufuhr-Verteiler auch durch zwei eine Gas-Weiche bildende Ventile mit je einem separat einstellbaren Einstellorgan ersetzt werden. Im übrigen bestände auch die Möglichkeit, zwei separate Gas-Übertragungsschuhe vorzusehen, von denen einer für die Gas-Zuleitung und einer für die Gas-Ableitung dient.

Ferner könnte der Trommel-Mantel statt durchgehend über den ganzen Umfang auch nur in einer Anzahl über den Umfang verteilter Sektoren perforiert sein. In diesem Fall wäre es möglich, als Zuleit- und Ableit-Kammern eine Anzahl starr an der Aussenseite des Trommel-Mantels befestigte Kanäle vorzusehen, die dann mit der Trommel mitrotieren würden. Die sich gerade im Bereich des Tabletten-Bettes befindenden Kanäle könnten dann über auf einer Trommel-Stirnseite angeordnete Gas-Kupplungen mit Gebläsen zum Einblasen bzw. Absaugen von Luft verbunden werden.

Schliesslich wäre es noch möglich, die Trommel um eine geneigte Drehachse zu drehen. Die Wand der Trommel könnte dann etwa kessel- oder zwiebelförmig sein und müsste natürlich einen sie unten abschliessenden Bodenteil aufweisen.

**Patentansprüche**

1. Vorrichtung zum Überziehen von Teilchen, insbesondere Arzneimittel-Teilchen, wie Tabletten und dergleichen, mit einer in einem Gestell (3) um eine mit einer Vertikalen einen Winkel bildende Drehachse (5) drehbar gelagerten Trommel (7), deren Wand mindestens teilweise perforiert ist, und mit Kammern (67, 69), die Öffnungen mit beim Betrieb an der Wand anliegenden Rändern aufweisen, um Gas, beispielsweise Luft, durch die Perforation mindestens eines Teils eines im Innern der Trommel (7) zumindest im wesentlichen von Teilchen bedeckten Wand-Abschnitts hindurch in den Innenraum der Trommel hineinzuleiten und durch die Perforation mindestens eines anderen Teils des genannten Wand-Abschnitts hindurch aus dem Innenraum der Trommel (7) herauszuleiten, dadurch gekennzeichnet, dass die Kammern (67, 69) in einem beim Betrieb bezüglich der Drehachse (5) ausserhalb der Trommel (7) unverdrehbar am Gestell (3) gehaltenen Gas-Übertragungsschuh (41) angeordnet sind, dass am Gestell (3) eine den Gas-Übertragungsschuh (41) verschiebbar führende Führung (43) angeordnet ist, dass der Gas-Übertragungsschuh (41) in einer Stellung, in der er an der Trommel (7) anliegt, arretierbar ist und im nicht arretierten Zustand von der Trommel (7) weg verschiebbar ist, und dass mindestens ein quer zum Trommel-Umfang verlaufender Rand von mindestens einer der genannten Öffnungen durch eine entlang dem Trommel-Umfang versetz- oder verstellbare Dichtung (57) gebildet ist, sodass die entlang dem Trommel-Umfang gemessene Ausdehnung von mindestens einer der genannten Öffnungen veränderbar ist.

2. Vorrichtung nach Anspruch 1, dadurch gekennzeichnet, dass ein die Trommel (7) umschliessendes Gehäuse (13) vorhanden und mit einer verschliessbaren Öffnung versehen ist, wobei vorzugsweise das Gehäuse (13) die Trommel (7) mindestens einigermassen staub- und gasdicht umschliesst, und dass der Gas-Übertragungsschuh (41), wenn er an der Trommel (7) anliegt, sich im Innern des Gehäuses (13) befindet und, wenn die genannte Öffnung des letzteren offen ist, durch diese Öffnung hindurch von der Trommel (7) entfernbar ist.

3. Vorrichtung nach einem der Ansprüche 1 oder 2, dadurch gekennzeichnet, dass der Gas-Übertragungsschuh (41) mit Rollen auf Laufflächen verschiebbar und durch Abheben von den letzteren vollständig vom Gestell (3) trennbar ist.

4. Vorrichtung nach einem der Ansprüche 1 bis 3, dadurch gekennzeichnet, dass mindestens die in der genannten Weise gemessene Ausdehnung der zum Herausleiten von Gas aus der Trommel (7) dienende Kammer-Öffnung in der genannten Weise veränderbar ist.

5. Vorrichtung nach einem der Ansprüche 1 bis 4, dadurch gekennzeichnet, dass nur eine einzige zum Hineinleiten von Gas in die Trommel (7) dienende Zuleit-Kammer (69) und nur eine einzige zum Herausleiten von Gas aus der Trommel (7) dienende Ableit-Kammer (67) vorhanden sind und dass diese Kammern (67, 69) je nur eine einzige an der Wand der Trommel (7) anliegende Zuleit-bzw. Ableit-Öffnung begrenzen.

6. Vorrichtung nach einem der Ansprüche 1 bis 5, wobei die Öffnungen der Kammern (67, 69) entlang dem Trommel-Umfang gegeneinander versetzt sind, dadurch gekennzeichnet, dass mindestens der obere Rand der obersten Kammer-Öffnung durch die versetz- oder verstellbare Dichtung (57) gebildet ist.

7. Vorrichtung nach Anspruch 5 und 6, dadurch gekennzeichnet, dass die Öffnungen der beiden Kammern (67, 69) durch eine gemeinsame Dichtung (63) gegeneinander abgegrenzt sind.

8. Vorrichtung nach Anspruch 7, dadurch gekennzeichnet, dass die die beiden Kammer-Öffnungen gegeneinander abgrenzende Dichtung entlang dem Trommel-Umfang versetz- oder verstellbar ist.

9. Vorrichtung nach einem der Ansprüche 1 bis 8, dadurch gekennzeichnet, dass zum Zu- und Ableiten von Gas zum bzw. vom Gas-Übertragungsschuh zwei Kupplungen (71, 73) vorhanden sind, von denen jede ein starr am Gestell (3) und ein starr am Gas-Übertragungsschuh (41) befestigtes Kupplungsstück aufweist, dass mindestens eines der beiden zur gleichen Kupplung (71, 73) gehörenden Kupplungsstücke mit einem Dichtungsring versehen ist, dass die zur gleichen Kupplung (71, 73) gehörenden Kupplungsstücke derart ausgebildet und angeordnet sind, dass sie bei in der genannten Stellung arretiertem Gas-Übertragungsschuh (41) aneinander anliegen und die Kammern (67, 69) gasmässig mit am Gestell (3) angeordneten Leitungen (75, 77) verbinden, wobei die zur gleichen Kupplung (71, 73) gehörenden Kupplungsstücke bei in der genannten Stellung arretiertem Gas-Übertragungsschuh (41) beispielsweise bei Berührungs-Ebenen aneinander anliegen, die mit der Verschieberichtung des Gas-Übertragungsschuhs (41) einen höchstens 45° betragenden Winkel bilden und vorzugsweise eine gasmässige Verbindung ergeben, ohne durch an ihnen selbst angreifende Spannmittel zusammengehalten zu werden, sodass sie bei nicht arretiertem Gas-Übertragungsschuh (41) durch Wegschieben des letzteren von der Trommel (7) voneinander getrennt werden können.

10. Vorrichtung nach einem der Ansprüche 1 bis 9, dadurch gekennzeichnet, dass die Kammer (69) zum Hineinleiten von Gas in die rotierende Trommel (7) unabhängig von deren Drehstellung dauernd fluidmässig mit einem zum Zuführen von Luft dienenden Gebläse (91) und die Kammer (67) zum Herausleiten von Gas aus der Trommel (7) unabhängig von deren Drehstellung dauernd fluidmässig einem zum Absaugen von Luft dienenden Saug-Gebläse (83) verbunden ist.

11. Vorrichtung nach einem der Ansprüche 1 bis 9, dadurch gekennzeichnet, dass ein Heizorgan (87) zum Erwärmen des der Trommel (7) zuzuführenden Gases vorhanden sowie mit der zum Hineinleiten von Gas in die Trommel (7) dienenden Kammer (69) und einer zusätzlichen Leitung (79) zum Zuleiten von Gas verbunden ist, die bei einer auf einer Stirnseite der Trommel (7) in dieser vorhandenen Öffnung in den beim Betrieb teilchenfreien Bereich der Trommel (7) mündet, wobei vorzugsweise ein einstellbarer Gaszufuhr-Verteiler (85) vorhanden ist, mit dem das Verhältnis zwischen der im genannten Wand-Abschnitt und der im teilchenfreien Trommel-Bereich zugeführten Gas-Menge einstellbar ist.

12. Vorrichtung nach einem der Ansprüche 1 bis 11, dadurch gekennzeichnet, dass die Trommel (7) in einem kreiszylindrischen Mantel (7a) angeordnete Perforations-Löcher (7b) aufweist, die abgesehen von einem allfälligen Unterbruch bei einer allenfalls vorhandenen, mit einem Verschluss-Element verschliessbaren Entnahme-Öffnung gleichmässig über den Umfang des Mantels (7a) verteilt sind, dass die Führung (43) rechtwinklig zur Trommel-Drehachse (5) verläuft und dass die versetz- oder verstellbare Dichtung (57) parallel zur Trommel-Drehachse (5) verläuft und in der genannten Stellung am zylindrischen Mantel (7a) anliegt.

## Claims

1. Device for the coating of particles, in particular medicinal particles such as tablets and the like, with a drum (7), which is borne in a frame (3) to be rotatable about a rotational axis (5) forming an angle with a vertical line and the wall of which is at least partially perforated, and with chambers (67, 69), which display openings which in operation lie against the wall in order to guide gas, for example air, through the perforation of at least a part of a wall portion, which is covered at least substantially by particles in the interior of the drum (7), into the interior space of the drum and through the perforation of at least another part of the named wall portion out of the interior space of the drum (7), characterised thereby, that the chambers (67, 69) are arranged in a gas transfer shoe (41), which in operation is held at the frame (3) externally of the drum (7) to be non-rotatable with respect to the rotational axis (5), that a guide (43) displaceably guiding the gas transfer shoe (41) is arranged at the frame (3), that the gas transfer shoe (41) is arrestable in a setting, in which it lies against the drum (7), and in the non-arrested state is displaceable away from the drum (7), and that at least one rim of at least one of the named openings, which extends transversely to the drum circumference is formed by a seal (57), which is resettable or adjustable along the drum circumference so that the extent, measured along the drum circumference, of at least one of the named openings is alterable.

2. Device according to claim 1, characterised thereby, that a housing (13) enclosing the drum (7) is present and provided with a closable opening, wherein the housing (13) preferably encloses the drum (7) at least to some degree in dust-tight and gas-tight manner, and that the gas transfer shoe (41), when it lies against the drum (7), is disposed in the interior of the housing (13), and, when the named opening of the latter is open, is removable from the drum (7) through this opening.

3. Device according to one of the claims 1 or 2, characterised thereby, that the gas transfer shoe (41) is displaceable by rollers on running surfaces and, through lifting off from the latter, completely separable from the frame (3).

4. Device according to one of the claims 1 to 3, characterised thereby, that at least the extent, measured in the named manner, of the chamber opening, which serves for the guiding of gas out of the drum (7), is alterable in the named manner.

5. Device according to one of the claims 1 to 4, characterised thereby, that only a single inlet chamber (69) serving for the guiding of gas into the drum (7) and only a single outlet chamber (67) serving for the guiding of gas out of the drum (7) are present and that these chambers (67, 69) each bound only a single respective inlet or outlet opening lying against the wall of the drum (7)..

6. Device according to one of the claims 1 to 5, wherein the openings of the chambers (67, 69) are each displaced relative to the other along the drum circumference, characterised thereby, that at least the upper rim of the uppermost chamber opening is formed by the resettable or adjustable seal (57).

7. Device according to claim 5 and 6, characterised thereby, that the openings of both the chambers (67, 69) are bounded each against the other by a common seal (63).

8. Device according to claim 7, characterised thereby, that the seal, which bounds both the chamber openings each against the other, is resettable or adjustable along the drum circumference.

9. Device according to one of the claims 1 to 8, characterised thereby, that for the guiding of gas to and from the gas transfer shoe (41), two couplings (71, 73) are present, each of which displays one coupling member rigidly fastened to the frame (3) and one coupling member rigidly fastened to the gas transfer shoe (41), that at least one of the coupling members belonging to the same coupling (71, 73) is provided with a sealing ring, that the coupling members belonging to the same coupling (71, 73) are constructed and arranged in such a manner that, when the gas transfer shoe (41) is arrested in the named setting, they each lie against the other and connect the chambers (67, 69) in terms of gas with ducts (75, 77) arranged at the frame (3), wherein the coupling members belonging to the same coupling (71, 73), when the gas transfer shoe (41) is arrested in the named setting, each lie against the other for example with planes of contact, which form an angle amounting to at most 45° with the direction of displacement of the gas transfer shoe (41) and preferably form a connection in terms of gas without being held together by tensioning means engaging at them so that, when the gas transfer shoe (41) is not arrested, they can not be separated one from the other through pushing the gas transfer shoe (41) away from the drum (7).

10. Device according to one of the claims 1 to 9, characterised thereby, that the chamber (69) for the guiding of gas into the rotating drum (7) is connected independently of its rotational setting permanently in terms of fluid with a blower (91) serving for the supply of air and the chamber (67) for the guiding of gas out of the drum (7) is connected independently of its rotational setting permanently in terms of fluid with a suction fan (83) serving for the sucking-away of air.

11. Device according to one of the claims 1 to 9, characterised thereby, that a heating organ (87) is present for the heating of the gas to be guided to the drum (7) as well as connected with the chamber (69) serving for the guiding of gas into the drum (7) and an additional duct (79) for the supply of gas, which at an opening present in the drum (7) at an end face thereof opens into that region of the drum (7), which in operation is free of particles, wherein an adjustable gas supply distributor (85) is preferably present, by which the ratio between the gas quantities respectively supplied in the named wall portion and the particle-free drum region is adjustable.

12. Device according to one of the claims 1 to 11, characterised thereby, that the drum (7) displays perforation holes (7b), which are arranged in a circularly cylindrical shell (7a) and which, apart from an interruption where applicable at a withdrawal opening which may need to be present and is closable by a closure element, are uniformly distributed over the circumference of the shell (7a), that the guide (43) extends at right angles to the rotational axis (5) of the drum and that the resettable or adjustable seal (57) extends parallelly to the rotational axis (5) of the drum and in the named setting lies against the cylindrical shell (7a).

## Revendications

1. Installation pour l'enrobage de particules, notamment de particules pharmaceutiques, telles que des comprimés et analogues, comprenant un tambour (7) qui est monté rotatif dans un bâti (3) autour d'un axe de rotation (5) faisant un certain angle avec la verticale et dont la paroi est au moins partiellement perforée, et des chambres (67, 69) comportant des ouvertures qui présentent des bords s'appuyant en cours de fonctionnement sur la paroi et qui servent d'une part à introduire du gaz, par exemple de l'air, dans la cavité interne du tambour, à travers les perforations d'au moins une partie d'une section de paroi qui, à l'intérieur du tambour (7), est recouverte de particules au moins dans une mesure notable, et d'autre part à évacuer du gaz hors de la cavité interne du tambour (7), à travers les perforations d'au moins une autre partie de la section indiquée de paroi, caractérisée en ce que les chambres (67, 69) sont disposées dans un sabot de transfert de gaz (41) qui, en fonctionnement, est maintenu sur le bâti (3) de manière à ne pas pouvoir tourner à l'extérieur du tambour (7) par rapport à l'axe de rotation (5), en ce qu'est disposé sur le bâti (3) un guide (43) qui guide ce sabot de transfert de gaz (41) avec possibilité de déplacement en translation, en ce que ce sabot de transfert de gaz (41) peut être bloqué dans une position dans laquelle il s'appuie sur le tambour (7) et peut, à l'état non bloqué, être déplacé en translation à l'écart de ce tambour (7), et en ce qu'au moins un bord de l'une au moins des ouvertures indiquées qui s'étend transversalement à la périphérie du tambour est constitué par un joint d'étanchéité (57) déplaçable ou réglable le long de cette périphérie du tambour de façon qu'on puisse faire varier l'étendue de l'une au moins des ouvertures indiquées, mesurée le long de cette périphérie du tambour.

2. Installation selon la revendication 1, caractérisée en ce qu'il est prévu un carter (13) qui enferme le tambour (7) et est muni d'une ouverture obturable, le carter (13) enfermant de préférance le tambour (7) d'une manière étanche, au moins dans une certaine mesure, à la poussière et aux gaz, et en ce que, lorsqu'il s'appuie sur le tambour (7), le sabot de transfert de gaz (41) se trouve à l'intérieur du carter (13) et, lorsque l'ouverture indiquée de ce dernier est ouverte, il peut, à travers cette ouverture, être éloigné du tambour (7).

3. Installation selon l'une des revendications 1 et 2, caractérisée en ce que le sabot de transfert de gaz (41) peut être déplacé en translation sur des surfaces de roulement à l'aide de galets et peut être séparé totalement du bâti (3) en étant soulevé de sur ces surfaces de roulement.

4. Installation selon l'une des revendications 1 à 3, caractérisée en ce qu'on peut faire varier de la manière indiquée au moins l'étendue, mesurée de la manière indiquée, de l'ouverture de chambre qui sert à l'évacuation du gaz hors du tambour (7).

5. Installation selon l'une des revendications 1 à 4, caractérisée en ce qu'il n'est prévu qu'une seule chambre d'amenée (69) servant à introduire le gaz dans le tambour (7) et une seule chambre d'évacuation (67) servant à extraire le gaz hors de ce tambour (7), et en ce que ces chambres (67, 69) ne délimitent chacune qu'une seule ouverture d'amenée ou d'évacuation qui s'appuie sur la paroi du tambour (7).

6. Installation selon l'une des revendications 1 à 5, dans laquelle les ouvertures des chambres (67, 69) sont décalées l'une par rapport à l'autre le long de la périphérie du tambour, caractérisée en ce qu'au moins le bord supérieur de l'ouverture de chambre la plus haute est constitué par le joint d'étanchéité déplaçable ou réglable (57).

7. Installation selon la revendication 5 ou 6, caractérisée en ce que les ouvertures des deux chambres (67, 69) sont délimitées l'une par rapport à l'autre par un joint commun d'étanchéité (63).

8. Installation selon la revendication 7, caractérisée en ce que le joint d'étanchéité qui délimite les deux ouvertures de chambre l'une par rapport à l'autre est déplaçable ou réglable le long de la périphérie du tambour.

9. Installation selon l'une des revendications 1 à 8, caractérisée en ce que, pour l'amenée et l'évacuation du gaz vers et hors du sabot de transfert de gaz, il est prévu deux raccords (71, 73) dont chacun comprend un élément fixé rigidement sur le bâti (3) et un élément fixé rigidement sur le sabot de transfert de gaz (41), en ce qu'au moins l'un des deux éléments de raccord appartenant au même raccord (71, 73) est muni d'un anneau d'étanchéité, en ce que les éléments de raccord appartenant au même raccord (71, 73) sont agencés et disposés de façon qu'ils s'appuient l'un sur l'autre lorsque le sabot de transfert de gaz (41) est bloqué dans la position indiquée et que les chambres (67, 69) soient reliées de manière étanche aux gaz à des tuyauteries (75, 77) disposées sur le bâti (3), de sorte que, lorsque le sabot de transfert de gaz (41) est bloqué dans la position indiquée, les éléments de raccord appartenant au même raccord (71, 73) s'appuient l'un sur l'autre par exemple suivant des plans de contact qui font un angle s'élevant au plus à 45° avec la direction de déplacement en translation du sabot de transfert de gaz (41) et assurent avantageusement une liaison étanche aux gaz, sans être maintenus par des moyens de serrage s'appliquant sur eux-mêmes, de sorte que, lorsque le sabot de transfert de gaz (41) n'est pas bloqué, ils peuvent être séparés, l'un de l'autre par éloignement en translation de ce dernier par rapport au tambour (7).

10. Installation selon l'une des revendications 1 à 9, caractérisée en ce que la chambre (69) d'introduction du gaz dans le tambour rotatif (7) est reliée de manière étanche aux fluides et de façon permanente, indépendamment de la position angulaire de ce tambour, à un ventilateur (91) servant à l'amenée d'air et la chambre (67) d'évacuation du gaz hors du tambour (7) est reliée de manière étanche aux fluides et de façon permanente, indépendamment de la position angulaire de ce tambour, à un ventilateur extracteur (83) servant à l'aspiration de l'air.

11. Installation selon l'une des revendications 1 à 9, caractérisée en ce qu'un organe de chauffage (87), qui sert à réchauffer le gaz à envoyer au tambour (7), est relié à la chambre (69) servant à l'introduction du gaz dans le tambour (7) et à une tuyauterie supplémentaire (79) qui permet d'amener le gaz et qui débouche dans la zone du tambour (7) exempte de particules en cours de fonctionnement par une ouverture qui est prévue dans le tambour (7) sur un côté frontal de celui-ci, tandis qu'il est avantageusement prévu un répartiteur réglable d'amenée de gaz (85) à l'aide duquel on peut régler le rapport existant entre la quantité de gaz envoyée à la section indiquée de paroi et celle envoyée dans la zone du tambour qui est exempte de particules.

12. Installation selon l'une des revendications 1 à 11, caractérisée en ce que le tambour (7) comporte des trous de perforation (7b) qui sont disposés suivant une enveloppe cylindrique à base circulaire (7a) et qui sont répartis de manière uniforme sur la périphérie de cette enveloppe (7a) à l'exception d'une interruption éventuelle à l'endroit d'une ouverture d'extraction éventuellement prévue et obturable à l'aide d'un élément de fermeture, en ce que le guide (43) s'étend perpendiculairement à l'axe de rotation (5) du tambour et en ce que le joint d'étanchéité (57) déplaçable ou réglable s'étend parallèlement à cet axe de rotation (5) du tambour et s'appuie, pour la position indiquée, sur l'enveloppe cylindrique (7a).

Fig.1

Fig.2

Fig. 3

Fig. 4